# FASCICULE DE BREVET EUROPEEN

(11) **EP 2 810 266 B1**
(45) Date de publication et mention de la délivrance du brevet: **25.10.2017**
(21) Numéro de dépôt: 13706587.6
(22) Date de dépôt: 30.01.2013
(51) Int. Cl.: G08C 17/02

(54) **PROCÉDÉ ET DISPOSITIF DE COMMUNICATION POUR LA COMMANDE À DISTANCE D'UN ACTIONNEUR POUR UN ÉQUIPEMENT MOBILE DU BÂTIMENT**
KOMMUNIKATIONSVERFAHREN UND VORRICHTUNG ZUR FERNSTEUERUNG EINES AKTUATORS FÜR MOBILE VORRICHTUNGEN IN EINEM GEBÄUDE
COMMUNICATION METHOD AND DEVICE FOR REMOTE CONTROL OF AN ACTUATOR FOR MOBILE EQUIPMENT IN A BUILDING

(30) Priorité: 02.02.2012 FR 1250966
(43) Date de publication de la demande: 10.12.2014
(73) Titulaire: SOMFY ACTIVITES SA, 74300 Cluses (FR)
(72) Inventeur: PELLARIN, Florent, 74960 MEYTHET (FR)
(74) Mandataire: Verriest, Philippe
(86) Numéro de dépôt international: PCT/FR2013/050182
(87) Numéro de publication internationale: WO 2013/114036

(56) Documents cités:
- WO-A1-2005/119621
- WO-A1-2011/063182

## Description

La présente invention concerne un dispositif de communication pour la commande à distance d'un actionneur pour un équipement mobile du bâtiment tel qu'un volet roulant, store ou rideau et un procédé de configuration d'un tel dispositif.

Il est connu d'utiliser un dispositif de communication comprenant un récepteur et une unité de traitement des données destinée à recevoir un signal en provenance du récepteur et à traiter ce signal reçu en tant que trame d'un mode de communication.

Un tel type de dispositif connu permet notamment de réaliser la commande à distance d'un actionneur pour un équipement mobile du bâtiment, en particulier du type fermeture, par exemple une porte, un portail ou une fenêtre, ou de type protection solaire, écran de projection multimédia ou encore trappe de ventilation.

Différents types de protocoles de communications existant permettent de réaliser une telle commande à distance. En particulier, le document EP1696402 décrit un tel type de protocole. Des protocoles connus sous les noms correspondant à des marques déposées RTS®, io-homecontrol®, z-wave®, ou Zigbee® sont également utilisés à ces fins.

Il apparaît toutefois que les bandes de fréquences utilisables pour une communication sur la base des protocoles mentionnés ci-dessus sont distinctes selon des pays ou des régions différentes. Ainsi, chaque dispositif doit être spécifique d'un type de protocole et d'une bande de fréquence déterminée, et est donc spécifique d'un pays ou d'une région donnée.

Cette absence d'harmonisation des fréquences radio autorisées et donc utilisables entre les pays conduit à fabriquer des produits spécifiques à chaque pays de façon à ce que ce produit communique sur la bande de fréquences autorisée.

Une stratégie de production de ce type tend à segmenter la production des lots de produits, chaque lot étant spécifique à une zone correspondant à un ensemble de pays ou de régions utilisant les mêmes types de bandes de fréquences et/ou de protocoles, et à utiliser des références de produits différentes pour chaque lot distinct.

Il en découle une augmentation des coûts et de la complexité de la fabrication des produits, étant donné le nombre important de lots et de leur faible taille. De la même façon les tests de produits sont multipliés par le nombre de lots. Enfin, un stock dormant important est constitué car un lot ne peut être écoulé que dans la zone qui lui est propre, et il n'est pas possible d'utiliser le stock d'un lot donné pour compenser une demande exceptionnelle concernant une zone différente. Le document WO2011/063182 apporte une première solution à ce problème en proposant une assistance à la reconnaissance du réseau.

Cette solution reste toutefois complexe à mettre en oeuvre.

La présente invention a pour but de résoudre tout ou partie des inconvénients mentionnés ci-dessus.

A cet effet, la présente invention a pour objet un procédé de fonctionnement d'un dispositif de communication pour la commande à distance d'un actionneur pour un équipement mobile du bâtiment comprenant les étapes consistant à :
a) analyser un premier signal reçu pour déterminer si au moins une séquence du premier signal reçu peut être interprétée comme étant conforme à un mode de communication de configuration utilisable par le dispositif de communication;
b) à réception d'au moins une séquence du premier signal reçu conforme à un mode de communication de configuration définir ledit mode de communication de configuration comme mode de communication de configuration identifié;
c) définir un mode de communication opérationnel en fonction du mode de communication de configuration identifié;
d) recevoir un deuxième signal selon le mode de communication opérationnel;
e) interpréter le deuxième signal reçu conformément au mode de communication opérationnel, de façon à identifier des données de commande dans le deuxième signal reçu ;

Grâce aux dispositions selon l'invention, une configuration ou une reconfiguration automatique du mode de communication utilisé par le dispositif est possible, en permettant ainsi l'utilisation d'un même type de dispositif pour de multiples modes de communication opérationnels.

A titre d'exemple, pour un dispositif faisant partie d'un actionneur pour un équipement mobile, le procédé peut être mis en oeuvre lors d'une opération réaliséé lors de l'installation de l'actionneur sur site, par exemple réglage de fin de course ou appairage. Le mode de communication opérationnel du dispositif peut être à nouveau modifié réalisant les étapes du procédé lors d'une mise à jour, d'une réinitialisation, d'une phase de maintenance ou de paramétrage du dispositif.

Les signaux incidents qui permettent d'identifier le mode de communication opérationnel à utiliser peuvent être fournis par une télécommande qui est spécifique du mode de communication utilisé, en particulier une télécommande unidirectionnelle. Cette télécommande peut communiquer par un mode de communication particulier. Le dispositif se sert de cette référence pour définir son propre mode de communication. Il est également possible d'utiliser un outil dédié permettant de générer des trames de signaux incidents vers le dispositif.

Le risque de mauvais réglage du mode de communication est nul dans la pratique car deux modes de communication distincts peuvent se différencier notamment par : la fréquence, la modulation, le débit, le format des données, les données reçues et les codes de vérification d'erreur de transmission.

Grâce aux dispositions de l'invention, une diminution du nombre de références de dispositifs peut être obtenue, ce qui permet une fabrication optimisée des produits correspondants. L'adaptation des produits à de nouveaux modes de communication est par ailleurs facilitée. Il suffit en effet d'introduire de nouveaux paramètres correspondant à de nouveaux modes de communication dans la programmation du dispositif de communication. De cette manière, le dispositif de communication dispose de plusieurs modes de communication utilisables sélectivement, permettant la mise en oeuvre des modes de fonctionnement décrits dans la suite de ce document.

Selon un aspect de l'invention, la définition du mode de communication opérationnel est réalisée en fonction d'un signal reçu selon le mode de communication de configuration d'une part, et de données relatives à des relations prédéterminées entre des modes de communication de configuration et des modes de communication utilisateur d'autre part.

Cette définition du mode de communication opérationnel peut être qualifiée d'implicite, car les données de définition ne sont pas contenues dans le signal reçu selon le mode de communication de configuration, mais dans des données stockées dans le dispositif qui établissent une relation entre un mode de communication de configuration et un mode de communication opérationnel.

Selon un autre aspect de l'invention, la définition du mode de communication opérationnel est réalisée en définissant le mode de communication opérationnel comme étant le mode de communication de configuration identifié.

Cette disposition permet de définir simplement le mode de communication opérationnel à partir d'un signal incident, par exemple d'une télécommande destinée à être utilisée avec le dispositif de communication.

Selon un autre aspect de l'invention, l'analyse d'un signal reçu pour identifier si au moins une séquence du signal reçu peut être interprétée comme étant conforme à un mode de communication de configuration utilisable par le dispositif de communication comprend la vérification de la compatibilité du format d'une trame de signal reçu avec un format de trame d'un type de protocole correspondant audit mode de communication de configuration.

Selon un autre aspect de l'invention, l'analyse d'un signal reçu pour identifier si au moins une séquence du signal reçu peut être interprétée comme étant conforme à un mode de communication de configuration utilisable par le dispositif de communication comprend la vérification de la conformité d'une séquence de signal reçu avec le préambule d'une trame appartenant au type de protocole correspondant audit mode de communication de configuration.

Ces dispositions permettent de vérifier simplement la conformité du signal reçu avec un mode de communication sélectionné, en se basant notamment sur la reconnaissance du préambule d'une trame de protocole. La reconnaissance de ce préambule permet de confirmer que le décodage radiofréquence, le décodage des éléments binaires, le débit et la séquence du signal sont conformes à celle du mode de communication sélectionné, ce qui dans la plupart des cas est suffisant à sa caractérisation.

Selon un autre aspect de l'invention, l'analyse d'un signal reçu pour déterminer si au moins une séquence du signal reçu peut être interprétée comme étant conforme à un mode de communication de configuration utilisable par le dispositif de communication comprend la comparaison entre un code de vérification d'erreur calculé à partir de données du signal reçu d'une part et la valeur d'un code de vérification d'erreur compris dans une trame de signal reçu d'autre part.

Selon un autre aspect de l'invention, l'analyse du signal reçu en tant que séquence conforme à un mode de communication de configuration utilisable par le dispositif comprend les étapes consistant à :
a') Sélectionner un mode de communication de configuration particulier parmi une pluralité de modes de communication de configuration utilisables par le dispositif de communication,
b') Attendre la réception d'un signal pendant un intervalle de temps déterminé,
c') Si aucun signal n'est reçu dans l'intervalle de temps déterminé, retourner à l'étape a') de sélection d'un mode de communication de configuration particulier en sélectionnant un autre mode de communication de configuration parmi la pluralité de modes de communication de configuration utilisables par le dispositif de communication,
d') Si un signal est reçu dans l'intervalle de temps déterminé, procéder à une tentative d'interprétation du signal reçu selon le mode de communication de configuration sélectionné,
e') Si au moins une séquence du signal reçu peut être interprétée comme étant conforme au mode de communication de configuration sélectionné, définir ledit mode de communication sélectionné comme mode de communication de configuration identifié,
f') Si le signal reçu n'est pas interprété comme étant au moins en partie conforme au mode de communication de configuration sélectionné, retourner à l'étape a') de sélection d'un mode de communication de configuration particulier en sélectionnant un autre mode de communication de configuration parmi la pluralité de modes de communication de configuration utilisables par le dispositif de communication.

Selon un autre aspect de l'invention, une configuration du dispositif de communication est réalisée suite à la sélection d'un mode de communication de configuration.

Selon un autre aspect de l'invention, des modes de communication de configuration distincts utilisables par le dispositif de communication correspondent à des types de protocoles de communications différents, et/ou à des communications sur des bandes de fréquences distinctes.

La présente invention a également pour objet un dispositif de communication pour la commande à distance d'un actionneur pour un équipement mobile du bâtiment comprenant un récepteur et une unité de traitement des données destinée à recevoir un signal en provenance du récepteur et à interpréter ce signal conformément à un mode de communication, de configuration ou opérationnel, le dispositif de communication étant agencé pour mettre en oeuvre un procédé tel que décrit précédemment.

Ainsi, le dispositif présente un premier mode de fonctionnement dit de configuration correspondant aux premières étapes a) b) et c) du procédé et un second mode de fonctionnement dit opérationnel correspondant aux étapes d) et e) du procédé, dans lequel le mode de communication opérationnel est utilisé pour recevoir des signaux de commande.

Selon un aspect de l'invention, l'unité de traitement est agencée pour configurer le récepteur de façon à permettre une réception dans une bande de fréquence déterminée.

Selon un aspect de l'invention, le récepteur est un composant de communication par ondes radiofréquence.

Selon d'autres aspects de l'invention :
- le récepteur permet une communication à des fréquences comprises entre 200 MHz et 1 GHz.
- le récepteur permet une communication à des fréquences comprises entre 500 MHz et 1 GHz.

Il est également possible que les bandes de fréquences utilisées soient discontinues, avec par exemple une première bande de fréquence autour de 433MHz et une deuxième autour de 868 MHz.

Selon un autre aspect de l'invention, le dispositif comprend une unité d'alimentation électrique agencée de façon à fournir une alimentation électrique dont les caractéristiques de sorties sont indépendantes des caractéristiques d'entrées, en particulier une alimentation par batteries ou une alimentation à découpage.

Selon un autre aspect de l'invention, le dispositif comprend un émetteur, l'unité de traitement étant agencée pour configurer le cas échéant l'émetteur.

Dans le cas où le dispositif comprend un émetteur, par exemple un émetteur d'ordres tel que compris dans une télécommande ou une partie émettrice d'un émetteur-récepteur d'un actionneur électromécanique, une configuration est réalisée pour l'émetteur. Cette configuration permet de paramétrer les communications en retour du dispositif vers une source dans le cas d'un protocole bidirectionnel.

La présente invention a également pour objet un actionneur électromécanique pour un équipement mobile du bâtiment comprenant un dispositif de communication tel que décrit ci-dessus, et un moteur, une unité de commande pouvant être distincte ou confondue avec l'unité de traitement étant agencée pour commander le moteur en fonction de signaux reçus par le récepteur.

La présente invention a également pour objet une télécommande bidirectionnelle pour la commande à distance d'un actionneur pour un équipement mobile du bâtiment comprenant un dispositif de communication tel que décrit précédemment.

De toute façon, l'invention sera bien comprise à l'aide de la description qui suit, en référence au dessin schématique annexé représentant, à titre d'exemple non limitatif, plusieurs modes de réalisation d'un dispositif selon l'invention.
La figure 1 est un schéma représentatif d'un premier mode de réalisation d'un dispositif de communication selon l'invention.
La figure 2 est un schéma représentatif d'un second mode de réalisation d'un dispositif de communication permettant des communications bidirectionnelles selon l'invention, intégré dans un actionneur d'un équipement mobile du bâtiment.
La figure 3 est un schéma représentatif d'un second mode de réalisation d'un dispositif selon l'invention intégré dans une télécommande permettant des communications bidirectionnelles.
La figure 4 est un tableau illustrant différents modes de communications correspondant à des bandes de fréquences et à des types de protocoles distincts.
La figure 5 illustre un exemple de format de trame pouvant être utilisé dans le cadre de la commande d'un actionneur d'équipement mobile du bâtiment.
La figure 6 est un organigramme d'un procédé selon l'invention.

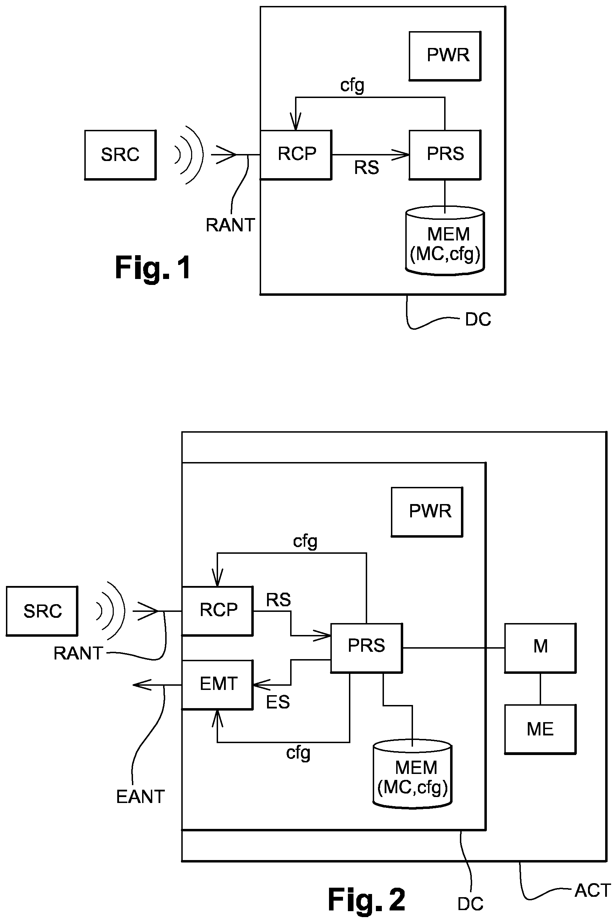

Selon un mode de réalisation représenté sur la figure 1, un dispositif de communication DC selon l'invention comprend un récepteur RCP, associée à une antenne de réception RANT et une unité de traitement des données PRS destinés à recevoir et à traiter les signaux en provenance du récepteur RCP.

Le récepteur RCP est dans ce mode de réalisation un récepteur radiofréquence analogique ou un récepteur radiofréquence numérique, par exemple dans le cas où un protocole du type RTS doit être utilisé.

Le dispositif de communication est agencé de façon à interpréter des signaux reçus selon une pluralité de modes de communications MC1 à MCp utilisables sélectivement par le dispositif de communication DC. Ainsi, le dispositif de communication mettant en oeuvre l'invention sélectionne un mode de communication parmi les modes de communication utilisables et ensuite interprète les signaux reçus selon ce mode de communication.

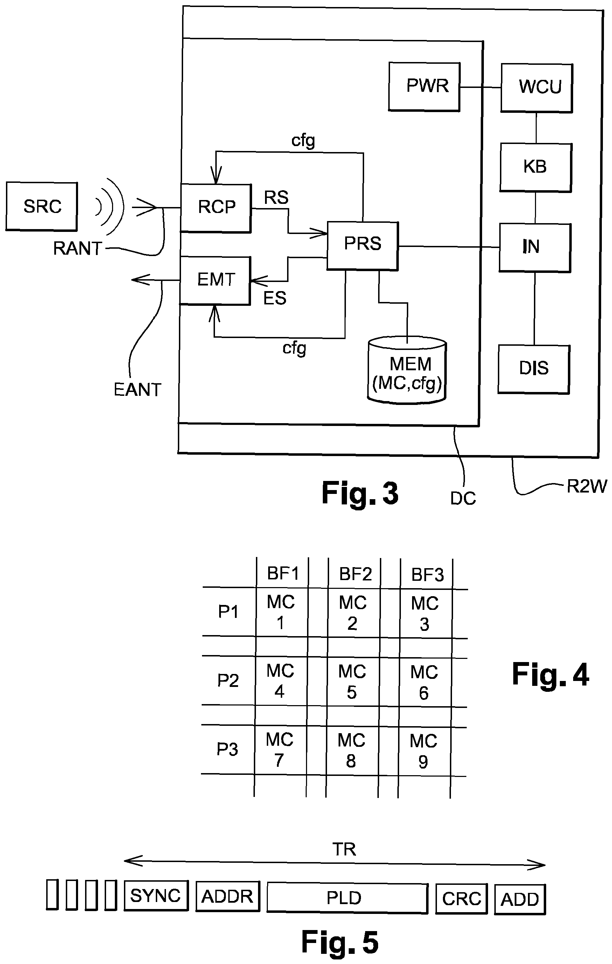

On entend ici par mode de communication (de configuration ou opérationnel) l'utilisation d'un protocole de communication particulier Pj dans une bande de fréquences BFk particulière, comme cela est illustré sur la figure 4. Bien entendu, le nombre de protocoles de communication utilisables et le nombre de bandes de fréquences peuvent varier suivant les modes de réalisation. Les différents modes de communications sont symbolisés en utilisant un indice i, j, et donc en désignant les modes de communication comme les modes MCi, MCj, les indices i, j, pouvant varier de 1 à p, pour faciliter l'explication. De même, les différents protocoles P et les bandes de fréquence BF pourront être représentés avec un indice. Les références MC, BF et P pourront toutefois être utilisées selon les cas avec ou sans indice.

Ainsi, les modes de communication MCi distincts peuvent correspondre à des types de protocoles Pj de communication différents, à savoir par exemple les protocoles de communication RTS®, io-homecontrol®, Zigbee® ou z-wave®.

De même, les modes de communications distincts peuvent correspondre à des communications sur des bandes de fréquences BFk distinctes.

Il apparaît que le récepteur RCP, qui est par exemple un récepteur radiofréquence, est en mesure de fonctionner sur plusieurs bandes de fréquence BFk, par exemple des bandes de fréquences définies autour des fréquences nominales suivantes : 433 / 868 / 915 / 960MHz. Les antennes RANT équipant le récepteur ne sont pas toujours efficaces sur l'ensemble des fréquences considérées. Dans ce cas, des types de dispositif DC peuvent être prévus pour des bandes de fréquences distinctes, par exemple, un dispositif fonctionnant pour les bandes de fréquence BF comprises entre 315 à 433 MHz, et un dispositif fonctionnant pour les bandes de fréquence BFk comprises entre 868 à 960 MHz.

En cas d'utilisation d'une antenne fonctionnant sur l'ensemble des fréquences, le même dispositif peut être utilisé sur l'ensemble des fréquences.

A titre d'exemple, dans la bande de fréquence entre de 868MHz à 960MHz : la bande dite « ISM »à 868MHz est utilisée en Europe, la bande à 915MHz est utilisée notamment aux USA, et la bande à 960 MHz est utilisée en Israël.

Comme cela est indiqué sur la figure 1, l'unité de traitement PRS est agencée pour configurer le récepteur RCP de façon à permettre une réception dans une bande de fréquence BF. Ainsi les différentes valeurs techniques des paramètres de configuration cfg du récepteur RCP lui permettent de fonctionner sur différentes fréquences pour un type d'antenne donné. Ces paramètres sont stockés dans une mémoire MEM associée à l'unité de traitement PRS. L'unité de traitement comprend d'autres éléments non représentés comme notamment un circuit d'horloge permettant de calculer des temporisations.

Le dispositif comprend par ailleurs une unité d'alimentation électrique PWR agencée de façon à fournir une alimentation électrique dont les caractéristiques de sorties sont indépendantes des caractéristiques d'entrées, en particulier une alimentation par batteries ou une alimentation à découpage.

L'utilisation d'une alimentation à découpage permet d'utiliser en aval de cette alimentation des composants identiques quelle que soit la tension d'entrée de l'alimentation à découpage. Ces dispositions permettent de rendre le dispositif compatible avec le réseau électrique du pays dans lequel il est installé. Une alimentation à découpage peut notamment être utilisée lorsque le dispositif est intégré dans un actionneur comme nous le détaillons ci-après. Dans le cas de l'intégration du dispositif dans une télécommande bidirectionnelle comme cela sera également détaillé, des piles ou batteries peuvent assurer une alimentation dont les caractéristiques sont indépendantes du réseau électrique local.

Le fonctionnement du dispositif de communication va être à présent décrit. Comme déjà mentionné, le dispositif de communication DC présente deux modes de fonctionnement distincts, un mode de fonctionnement de configuration F1 et un mode de fonctionnement opérationnel F2.

Le premier mode de fonctionnement de configuration F1 du dispositif de communication DC a pour but la définition du mode de communication opérationnel MUO qui doit être utilisé par le dispositif.

Le deuxième mode de fonctionnement opérationnel F2 correspond à l'interprétation des signaux reçus comme commandes à exécuter par l'actionneur, par exemple « monter », « stop », « descendre », ou en tant qu'informations en provenance des capteurs, ou encore en tant que compte rendus d'erreurs reçus au niveau de la télécommande ou de l'outil dédié.

Dans le cas des dispositifs de communication bidirectionnels, le mode de fonctionnement opérationnel F2 peut correspondre aussi à l'émission par l'actionneur des signaux comprenant des comptes rendus d'exécution des commandes.

L'unité de traitement PRS est agencée pour mettre en oeuvre son premier mode de fonctionnement de configuration F1 en particulier dans les cas suivants :
- lors de la première mise sous tension du dispositif, notamment en mode usine ;
- à l'initiative d'un installateur, lors de l'installation ou d'une mise à jour sur site, notamment lors d'une opération de maintenance, ou lors d'un changement de réglementation, correspondant par exemple à de nouvelles bandes de fréquences ou à de nouveaux protocoles de communication autorisés.
- à l'initiative d'un utilisateur, lors d'une mise à jour par l'intermédiaire d'une connexion internet à un serveur et d'une interface homme-machine pouvant être intégrée au dispositif ou déportée.
- lors d'une mise à jour déclenchée par le logiciel embarqué dans l'unité de traitement, le déclenchement de la mise à jour étant occasionné par un évènement comme une détection d'une erreur dans le fonctionnement de l'actionneur ou encore lors d'un autotest réalisé par le logiciel.

Dans ce premier mode de fonctionnement de configuration F1, le dispositif de communication DC est agencée de façon à analyser des signaux reçus RS par le récepteur RCP en provenance d'une source SRC de façon à déterminer si au moins une séquence du signal reçu RS peut être interprétée comme étant conforme à un mode de communication MCi parmi la pluralité de modes de communication de configuration MC1 à MCp utilisables par le dispositif de communication DC.

Par exemple, la source SRC peut être une télécommande unidirectionnelle. Les signaux sont émis par exemple par l'appui d'une touche de la télécommande qui active l'envoi de signaux correspondant à un mode de communication déterminé MCi, c'est-à-dire de trames selon un protocole de communication Pj déterminé dans une bande de fréquence BFk déterminée.

Un exemple de trame conforme à un mode de communication de configuration ou opérationnel utilisable par un dispositif de communication est décrit en référence à la figure 5.

Une telle trame TR est introduite par exemple par des impulsions de synchronisation, et comprend :
- des données de synchronisation SYNC logiques, qui permettent de détecter le début de la trame,
- des données d'adressage ADDR qui permettent d'identifier l'émetteur et/ou le ou les destinataires de la trame,
- des données constituant une charge utile PLD dont le contenu dépend du type de commande/d'opération effectuée.
- des données relatives à un code de vérification d'erreur, par exemple un code de redondance cyclique CRC,
- d'éventuelles données additionnelles ADD, comprenant par exemple une clé de cryptage.

Selon le type de trame utilisé, le nombre de champs, leur longueur et leur contenu peut évoluer. Il est donc possible d'identifier si une trame est conforme à un protocole donné et est une trame valide, par exemple en comparant la conformité d'une séquence du signal reçu RS avec le préambule comprenant les données de synchronisation SYNC d'une trame conforme au type de protocole Pj correspondant à un mode de communication particulier.

La reconnaissance de ce préambule permet de confirmer que le décodage radiofréquence, le décodage des éléments binaires, le débit et la séquence du signal sont conformes à celle du mode de communication sélectionné, ce qui dans la plupart des cas est suffisant à sa caractérisation.

Il est également possible de réaliser un calcul d'un code de vérification d'erreur, et de comparer le résultat du calcul à la valeur du code de vérification d'erreur CRC compris dans la trame, ou de vérifier si la longueur de la trame et le format de celle-ci correspond à un type de protocole donné. D'autres caractéristiques concernant la fréquence, la modulation, le débit du signal reçu, qui sont caractéristiques d'un type de protocole donné, peuvent être analysés par le dispositif de communication.

Après la reconnaissance d'au moins une séquence du signal reçu RS conforme à un mode de communication de configuration utilisable, le dispositif de communication DC définit ce mode de communication comme mode de communication de configuration identifié MCi.

Selon une première variante de réalisation, la définition du mode de communication opérationnel MUO est réalisée en définissant le mode de communication opérationnel MUO comme étant le mode de communication de configuration identifié MCi.

Selon une seconde variante de réalisation, la définition du mode de communication opérationnel MUO est réalisée de façon implicite par rapport au signal reçu RS selon le mode de communication de configuration MCi. A cet effet, l'unité de traitement stocke dans sa mémoire MEM des données relatives à des relations MUOk=f(MCj) entre des signaux reçus correspondant aux modes de communication de configuration MCj et des modes de communication opérationnels MUOk.

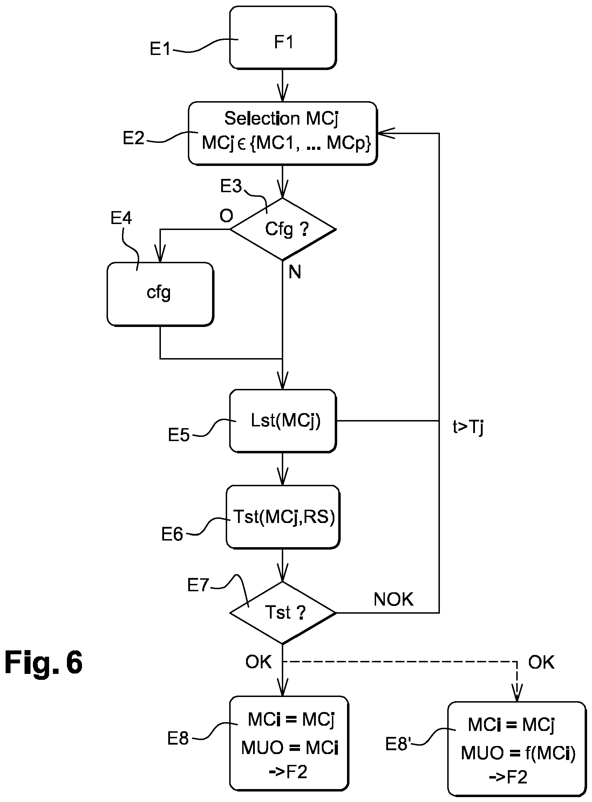

Le fonctionnement du dispositif de communication DC correspond à la mise en oeuvre d'un procédé dont les étapes sont décrites ci-dessous en référence à la figure 6.

Dans une première étape E1, le premier mode de fonctionnement F1 est sélectionné dans le but final de déterminer un mode de communication opérationnel MUO à utiliser pour le fonctionnement opérationnel F2 d'un dispositif de communication DC.

Dans une seconde étape E2, un mode de communication de configuration MCj est sélectionné parmi une pluralité de modes de communication de configuration MC1 à MCp pouvant être utilisés par le dispositif de communication DC.

Dans une troisième étape E3, un test est effectué pour identifier si un changement de configuration du composant récepteur RCP est nécessaire pour prendre en compte ce mode de communication de configuration MCj.

Si la réponse est positive, une quatrième étape E4 de configuration est effectuée. Sinon, la cinquième étape E5 est effectuée.

Dans la quatrième étape E4, les paramètres techniques de configuration cfg du composant récepteur RCP sont réglés par le dispositif de communication DC, qui stocke dans une mémoire MEM ces paramètres pour chaque mode de communication. La configuration est en particulier nécessaire lorsque le mode de communication courant correspond à une bande de fréquence BFk, à un débit ou à une modulation différente de celle du mode de communication précédemment utilisé ou lors de la première utilisation du dispositif de communication DC.

Dans une cinquième étape E5, une opération d'écoute Lst est réalisée, afin de capter un signal éventuellement envoyé par une source SRC. Cette étape d'écoute s'achève lorsqu'un signal RS est reçu ou lorsqu'une période de temps déterminée Tj s'est écoulée sans réception de signal. Dans le cas ou un signal RS est reçu, une sixième étape E6 est effectuée. Dans le cas ou une période de temps prédéterminée Tj s'est écoulée sans réception d'un signal, le procédé boucle sur la seconde étape E2 dans laquelle un choix d'un mode de communication de configuration différent est effectué.

Dans la sixième étape E6, une opération de test Tst est effectuée pour identifier si le signal reçu RS est susceptible d'être interprété comme étant conforme au mode de communication de configuration MCj, comme cela a été décrit ci-dessus.

Dans une septième étape E7, une vérification du résultat du test Tst est réalisée. Si le résultat du test est positif, le mode de communication de configuration courant MCj est défini comme mode de configuration identifié MCi et une huitième étape E8 est effectuée. Si le résultat du test est négatif, le procédé boucle sur la seconde étape E2 dans laquelle un choix d'un mode de communication de configuration différent est effectué.

Dans la huitième étape E8, le mode de configuration identifié MCi est choisi comme mode de communication opérationnel MUO à utiliser dans le second mode de fonctionnement du système F2 par le dispositif de communication DC. Le dispositif de communication passe ensuite automatiquement dans ce second mode de fonctionnement opérationnel F2, dans lequel le dispositif de communication DC est agencée de façon à interpréter les signaux reçus RS comme des signaux de commande conformément au mode de communication opérationnel MUO défini dans le premier mode de fonctionnement F1.

Selon une variante de mise en oeuvre du procédé représentée en tant qu'étape E8', une étape est réalisée dans laquelle le mode de communication opérationnel MUO est déterminé de façon implicite par rapport au mode de communication de configuration identifié MCi. A cet effet des données stockées dans la mémoire MEM du dispositif relatives aux modes de communication utilisateur MUk ainsi qu'à des relations MUOk=f(MCj) entre des signaux reçus correspondant aux modes de communication de configuration MCj et des modes de communication opérationnels MUOk sont utilisées. Le dispositif de communication DC passe ensuite automatiquement dans le mode de fonctionnement opérationnel F2, comme déjà expliqué,

Nous allons à présent décrire en référence aux figures 2 et 3 des modes de réalisation de l'invention utilisables dans le cas des modes de communication bidirectionnels, comme par exemple les modes de communications utilisant le protocole io-homecontrol®.

Selon un second mode de réalisation représenté sur la figure 2, le dispositif DC comprend, en plus du récepteur RCP, un émetteur EMT, associé à une antenne d'émission EANT, le dispositif de communication DC étant agencé pour configurer le cas échéant l'émetteur EMT.

Dans ce cas, le dispositif de communication DC procède à la configuration à la fois de son émetteur EMT et de son récepteur RCP pour s'assurer d'une réception et d'une émission dans une ou des bande(s) de fréquence déterminée(s).

Ce dispositif de communication DC est intégré dans un actionneur électromécanique. L'actionneur comprend un moteur M, une unité de commande agencée pour commander le moteur M en fonction de signaux reçus par le récepteur RCP dans le second mode de fonctionnement opérationnel F2 du dispositif. Cette unité de commande peut être distincte ou confondue avec le dispositif de communication DC.

Selon un troisième mode de réalisation représenté sur la figure 3, le dispositif de communication DC comprend les mêmes éléments que dans le second mode de réalisation. Le dispositif de commande est intégré dans une télécommande bidirectionnelle R2W. Une telle télécommande comprend une interface IN utilisateur comprenant un clavier de commande KB et éventuellement un écran DIS d'affichage d'information pour un utilisateur. Ces deux éléments peuvent être également combinés sous forme d'un écran tactile.

Les éléments de l'interface utilisateur IN sont reliés au dispositif de communication DC.

La télécommande peut également comprendre une unité de contrôle de réveil WCU, dont le but est d'activer l'unité de traitement PRS, l'émetteur radiofréquences EMT, et le récepteur RCP lorsqu'une touche du clavier est enfoncée, en reliant ces éléments à l'unité d'alimentation PWR.

Ces dispositions permettent de ne consommer de l'énergie que lorsqu'un signal de commande doit être émis. Les moyens de réception ne sont actifs de façon générale que pour une courte période après l'émission d'un signal par l'émetteur, afin de collecter un signal émis en réponse par le dispositif destinataire du signal de commande.

Dans le cadre d'une mise en oeuvre du premier mode de fonctionnement de configuration F1 d'un dispositif selon l'invention, il peut donc être nécessaire de prévoir l'actionnement d'une touche spécifique par l'utilisateur pour « réveiller » la télécommande R2W et ainsi permettre l'alimentation de l'unité de traitement PRS et du récepteur RCP par l'unité d'alimentation PWR.

Il convient ensuite de fournir un signal au récepteur RCP pour permettre une reconnaissance du mode de communication.

Ce signal peut être émis par une source SRC constituée par exemple par une télécommande unidirectionnelle, par un outil dédié ou par un actionneur selon l'état de la technique, ou un actionneur selon l'invention dont le dispositif de communication a précédemment été configuré et dont le mode de communication opérationnel est déterminé.

En ce qui concerne la réalisation de l'émetteur, de l'unité de traitement et éventuellement du récepteur contenus dans le dispositif, il apparaît que ces différents éléments peuvent être contenus sur un même circuit imprimé, ou réalisés de façon séparée.

Les fonctions décrites ci-dessus, à savoir notamment, la démodulation des signaux (par exemple des signaux en RF), le décodage/vérification du format de trame, la définition du mode de communication opérationnel, l'interprétation des signaux reçus comme signaux de commande et/ou de contrôle, peuvent être réalisés dans une configuration en un seul circuit qui comprend un sous-ensemble dédié aux fonctions de communication (notamment RF), une partie optionnelle de logique câblée et un processeur, ou encore une configuration en deux circuits comprenant par exemple :
- un premier circuit comprenant les fonctions de communication et une partie de logique câblée, et un second circuit comprenant le processeur, ou encore
- un premier circuit comprenant les fonctions de communication et un second circuit comprenant une partie de logique câblée et le processeur, ou encore
- un premier circuit comprenant les fonctions de communication et un second circuit comprenant le processeur.

Il apparaît que les opérations de décodage et vérification du code de correction d'erreur peuvent être réalisées par le composant de communication, par une partie de circuit en logique câblée ou par un processeur générique.

Il est à noter que l'utilisation des dispositifs selon l'invention ne complexifie pas le processus de fabrication et d'étalonnage des dispositifs. En particulier, lors de la validation d'un dispositif sur une fréquence donnée, un ajustement de la fréquence de fonctionnement est réalisé en modifiant la configuration d'un quartz présent dans le composant récepteur.

Il apparaît bien entendu que les différents modes de réalisations détaillés ci-dessus ne constituent que des exemples de mises en oeuvre de l'invention telle que définie par les revendications ci-jointes. Des variantes de ces différents modes de réalisations peuvent être envisagées et les différents modes de réalisations décrits peuvent être combinés de façon aisée par l'homme du métier.

## Revendications

1. Procédé de fonctionnement d'un dispositif de communication (DC) pour la commande à distance d'un actionneur (ACT) pour un équipement mobile (ME) du bâtiment comprenant les étapes consistant à :
a) analyser un premier signal reçu (RS) pour déterminer si au moins une séquence du premier signal reçu (RS) peut être interprétée comme étant conforme à un mode de communication de configuration (MCi) utilisable par le dispositif de communication (DC) ;
b) à réception d'au moins une séquence du premier signal reçu (RS) conforme à un mode de communication de configuration, définir ledit mode de communication de configuration (MCi) comme mode de communication de configuration identifié;
c) définir un mode de communication opérationnel (MUO) en fonction du mode de communication de configuration identifié (MCi) ;
d) recevoir un deuxième signal (RS2) selon le mode de communication opérationnel (MOU) ; et
e) interpréter le deuxième signal reçu (RS2) conformément au mode de communication opérationnel (MUO), de façon à identifier des données de commande dans le deuxième signal reçu (RS2).

2. Procédé selon la revendication 1, dans lequel la définition du mode de communication opérationnel (MUO) est réalisée en fonction du mode de communication de configuration identifié(MCi) d'une part, et de données relatives à des relations prédéterminées entre des modes de communication de configuration (MCj) et des modes de communication opérationnels (MUk) d'autre part.

3. Procédé selon la revendication 1, dans lequel la définition du mode de communication opérationnel (MUO) est réalisée en définissant le mode de communication opérationnel (MUO) comme étant le mode de communication de configuration identifié(MCi).

4. Procédé selon l'une des revendications précédentes, dans lequel l'analyse du premier signal reçu (RS) pour déterminer si au moins une séquence du premier signal reçu (RS) peut être interprétée comme étant conforme audit mode de communication de configuration (MCi) comprend la vérification de la conformité d'une séquence du premier signal reçu (RS) avec un format de trame d'un type de protocole (Pj) correspondant audit mode de communication de configuration (MCi).

5. Procédé selon l'une des revendications précédentes, dans lequel l'analyse du premier signal reçu (RS) pour déterminer si au moins une séquence du premier signal reçu (RS) peut être interprétée comme étant conforme audit mode de communication de configuration (MCi) comprend la vérification de la conformité d'une séquence du premier signal reçu (RS) avec le préambule (SYNC) d'une trame appartenant au type de protocole (Pj) correspondant audit mode de communication de configuration (MCi).

6. Procédé selon l'une des revendications précédentes, dans lequel l'analyse du premier signal reçu (RS) pour déterminer si au moins une séquence du premier signal reçu (RS) peut être interprétée comme étant conforme audit mode de communication de configuration (MCi) comprend la comparaison entre un code de vérification d'erreur calculé à partir de données du signal reçu (RS) d'une part et la valeur d'un code de vérification d'erreur compris dans une trame de signal reçu (RS) d'autre part.

7. Procédé selon l'une des revendications précédentes, dans lequel l'analyse du premier signal reçu (RS) en tant que séquence conforme audit mode de communication de configuration (MCi) comprend les étapes consistant à :
a') Sélectionner (E2) un mode de communication de configuration (MCj) particulier parmi une pluralité de modes de communication de configuration utilisables (MC1 à MCp) par le dispositif de communication (DC) ;
b') Attendre (E5) la réception d'un signal (RS) pendant un intervalle de temps déterminé (Tj) ;
c') Si aucun signal n'est reçu dans l'intervalle de temps déterminé (Tj), retourner à l'étape a') de sélection d'un mode de communication de configuration particulier en sélectionnant un autre mode de communication de configuration parmi la pluralité de modes de communication de configuration utilisables (MC1 à MCp) par le dispositif de communication (DC) ;
d') Si un signal est reçu dans l'intervalle de temps déterminé (Tj), procéder (E6) à une tentative d'interprétation (Tst(MCj,RS)) du signal reçu (RS) selon le mode de communication de configuration sélectionné (MCj) ;
e') Si au moins une séquence du signal reçu (RS) peut être interprétée comme étant conforme au mode de communication de configuration (MCj) sélectionné, définir ledit mode de communication (MCj) sélectionné comme mode de communication de configuration identifié (MCi) ;
f') Si le signal reçu (RS) n'est pas interprété comme étant au moins en partie conforme au mode de communication de configuration (MCj) sélectionné, retourner à l'étape a') de sélection d'un mode de communication de configuration particulier en sélectionnant un autre mode de communication de configuration parmi la pluralité de modes de communication de configuration utilisables (MC1 à MCp) par le dispositif de communication (DC).

8. Procédé selon la revendication 7, dans lequel une configuration (E4) du dispositif de communication (DC) est réalisée suite à la sélection d'un mode de communication de configuration (MCj).

9. Procédé selon l'une des revendications précédentes, dans lequel des modes de communication de configuration distincts utilisables (MC1 à MCp) par le dispositif de communication (DC) correspondent à des types de protocoles (Pj) de communication différents.

10. Procédé selon l'une des revendications précédentes, dans lequel des modes de communication de configuration distincts utilisables (MC1 à MCp) par le dispositif de communication (DC) correspondent à des communications sur des bandes de fréquences (BFk) distinctes.

11. Dispositif de communication (DC) pour la commande à distance d'un actionneur (ACT) pour un équipement mobile (ME) du bâtiment comprenant un récepteur (RCP) et une unité de traitement des données (PRS) destinée à recevoir un signal (RS, RS2) en provenance du récepteur (RCP) et à interpréter le signal reçu (RS, RS2) conformément à un mode de communication (MCi, MCj, MOU), le dispositif de communication étant agencé pour mettre en oeuvre un procédé selon l'une des revendications 1 à 10.

12. Dispositif selon la revendication 11, dans lequel l'unité de traitement (PRS) est agencée pour configurer le récepteur (RCP) de façon à permettre une réception dans une bande de fréquence (BFk) déterminée.

13. Dispositif selon l'une des revendications 11 à 12 comprenant un émetteur (EMT), l'unité de traitement (PRS) étant agencée pour configurer le cas échéant l'émetteur (EMT).

14. Actionneur électromécanique (ACT) pour un équipement mobile (ME) du bâtiment comprenant un dispositif de communication (DC) selon l'une des revendications 11 à 13, et un moteur (M), une unité de commande pouvant être distincte ou confondue avec l'unité de traitement (PRS) et étant agencée pour commander le moteur (M) en fonction de signaux reçus (RS2) par le récepteur (RCP) selon le mode de communication opérationnel (MOU).

15. Télécommande bidirectionnelle (R2W) pour la commande à distance d'un actionneur (ACT) pour un équipement mobile (ME) du bâtiment comprenant un dispositif de communication (DC) selon la revendication 13.

## Patentansprüche

1. Verfahren zum Betreiben einer Kommunikationsvorrichtung (DC) zur Fernsteuerung eines Stellantriebs (ACT) für eine mobile Einrichtung (ME) aus dem Bauwesen, die folgenden Schritte umfassend:
a) Analysieren eines ersten empfangenen Signals (RS) zur Bestimmung, ob zumindest eine Sequenz des ersten empfangenen Signals (RS) als konform für einen Kommunikationsmodus zur Konfiguration (MCi) interpretiert werden kann, der von der Kommunikationsvorrichtung (DC) verwendet werden kann;
b) bei Empfang von zumindest einer Sequenz des ersten empfangenen Signals (RS) konform für einen Kommunikationsmodus zur Konfiguration, Definieren des besagten Kommunikationsmodus zur Konfiguration (MCi) als identifizierten Kommunikationsmodus zur Konfiguration;
c) Definieren eines betrieblichen Kommunikationsmodus (MUO) in Abhängigkeit vom identifizierten Kommunikationsmodus zur Konfiguration (MCi);
d) Empfangen eines zweiten Signals (RS2) gemäß dem betrieblichen Kommunikationsmodus (MUO); und
e) Interpretieren des zweiten empfangenen Signals (RS2) entsprechend dem betrieblichen Kommunikationsmodus (MUO), um in dem zweiten empfangenen Signal (RS2) Steuerungsdaten zu identifizieren.

2. Verfahren nach Anspruch 1, wobei die Definition des betrieblichen Kommunikationsmodus (MUO) in Abhängigkeit vom identifizierten Kommunikationsmodus zur Konfiguration (MCi) einerseits, und von Daten in Bezug auf die vorbestimmten Beziehungen zwischen den Kommunikationsmodi zur Konfiguration (MCj) und den betrieblichen Kommunikationsmodi (MUk) andererseits durchgeführt wird.

3. Verfahren nach Anspruch 1, wobei die Definition des betrieblichen Kommunikationsmodus (MUO) durchgeführt wird, indem man den betrieblichen Kommunikationsmodus (MUO) als den identifizierten Kommunikationsmodus zur Konfiguration (MCi) definiert.

4. Verfahren nach einem der vorstehenden Ansprüche, wobei die Analyse des ersten empfangenen Signals (RS) zur Bestimmung, ob zumindest eine Sequenz des ersten empfangenen Signals (RS) als konform für einen Kommunikationsmodus zur Konfiguration (MCi) interpretiert werden kann, die Überprüfung der Konformität einer Sequenz des ersten empfangenen Signals (RS) mit einem Rasterformat eines Protokolltyps (Pj) umfasst, das dem besagten Kommunikationsmodus zur Konfiguration (MCi) entspricht.

5. Verfahren nach einem der vorstehenden Ansprüche, wobei die Analyse des ersten empfangenen Signals (RS) zur Bestimmung, ob zumindest eine Sequenz des ersten empfangenen Signals (RS) als konform für einen Kommunikationsmodus zur Konfiguration (MCi) interpretiert werden kann, die Überprüfung der Konformität einer Sequenz des ersten empfangenen Signals (RS) mit der Präambel (SYNC) eines Rasters umfasst, die dem Protokolltyp (Pj) angehört, der dem besagten Kommunikationsmodus zur Konfiguration (MCi) entspricht.

6. Verfahren nach einem der vorstehenden Ansprüche, wobei die Analyse des ersten empfangenen Signals (RS) zur Bestimmung, ob zumindest eine Sequenz des ersten empfangenen Signals (RS) als konform für einen Kommunikationsmodus zur Konfiguration (MCi) interpretiert werden kann, den Vergleich zwischen einem Fehlerüberprüfungscode, der aus Daten des empfangenen Signals (RS) berechnet wird, einerseits, und dem Wert eines Fehlerüberprüfungscodes, der in einem Raster eines empfangenen Signals (RS) enthalten ist, andererseits, umfasst.

7. Verfahren nach einem der vorstehenden Ansprüche, wobei die Analyse des ersten empfangenen Signals (RS) als mit dem besagten Kommunikationsmodus zur Konfiguration (MCi) konforme Sequenz die folgenden Schritte umfasst:
a') Auswählen (E2) eines bestimmten Kommunikationsmodus zur Konfiguration (MCj) aus einer Vielzahl von durch die Kommunikationsvorrichtung (DC) verwendbaren Kommunikationsmodi zur Konfiguration (MC1 bis MCp);
b') Warten (E5) auf den Empfang eines Signals (RS) während eines bestimmten Zeitintervalls (Tj);
c') Falls innerhalb des bestimmten Zeitintervalls (Tj) kein Signal empfangen wird, Rückkehr zum Schritt a') zum Auswählen eines bestimmten Kommunikationsmodus zur Konfiguration durch die Auswahl eines anderen Kommunikationsmodus zur Konfiguration aus einer Vielzahl von durch die Kommunikationsvorrichtung (DC) verwendbaren Kommunikationsmodi zur Konfiguration (MC1 bis MCp);
d') Falls innerhalb des bestimmten Zeitintervalls (Tj) ein Signal empfangen wird, Vornehmen (E6) eines Interpretationsversuchs (Tst(MCj, RS)) des empfangenen Signals (RS) gemäß dem ausgewählten Kommunikationsmodus zur Konfiguration (MCj);
e') Falls zumindest eine Sequenz des empfangenen Signals (RS) als konform für den ausgewählten Kommunikationsmodus zur Konfiguration (MCj) interpretiert werden kann, Definieren des besagten ausgewählten Kommunikationsmodus zur Konfiguration (MCj) als identifizierten Kommunikationsmodus zur Konfiguration (MCi);
f') Falls das empfangene Signal (RS) nicht als zumindest teilweise konform für den ausgewählten Kommunikationsmodus zur Konfiguration (MCj) interpretiert werden kann, Rückkehr zum Schritt a') zum Auswählen eines bestimmten Kommunikationsmodus zur Konfiguration durch die Auswahl eines anderen Kommunikationsmodus zur Konfiguration aus einer Vielzahl von durch die Kommunikationsvorrichtung (DC) verwendbaren Kommunikationsmodi zur Konfiguration (MC1 bis MCp).

8. Verfahren nach Anspruch 7, wobei eine Konfiguration (E4) der Kommunikationsvorrichtung (DC) nach der Auswahl eines Kommunikationsmodus zur Konfiguration (MCj) durchgeführt wird.

9. Verfahren nach einem der vorstehenden Ansprüche, wobei unterschiedliche von der der Kommunikationsvorrichtung (DC) verwendbare Kommunikationsmodi zur Konfiguration (MC1 bis MCp) verschiedenen Protokolltypen (Pj) zur Kommunikation entsprechen.

10. Verfahren nach einem der vorstehenden Ansprüche, wobei unterschiedliche von der Kommunikationsvorrichtung (DC) verwendbare Kommunikationsmodi zur Konfiguration (MC1 bis MCp) Kommunikationen auf unterschiedlichen Frequenzbändern (BFk) entsprechen.

11. Kommunikationsvorrichtung (DC) zur Fernsteuerung eines Stellantriebs (ACT) für eine mobile Einrichtung (ME) aus dem Bauwesen, einen Empfänger (RCP) und eine Datenverarbeitungseinheit (PRS) umfassend, die dazu bestimmt ist, ein Signal (RS, RS2) vom Empfänger (RCP) zu empfangen, und das empfangene Signal (RS, RS2) entsprechend einem Kommunikationsmodus (MCi, MCj, MUO) zu interpretieren, wobei die Kommunikationsvorrichtung ausgeführt ist, um ein Verfahren nach einem der Ansprüche 1 bis 10 anzuwenden.

12. Vorrichtung nach Anspruch 11, wobei die Verarbeitungseinheit (PRS) ausgeführt ist, um den Empfänger (RCP) zu konfigurieren, um einen Empfang in einem bestimmten Frequenzband (BFk) zu erlauben.

13. Vorrichtung nach einem der Ansprüche 11 bis 12, einen Sender (EMT) umfassend, wobei die Verarbeitungseinheit (PRS) ausgeführt ist, um den Sender (EMT) gegebenenfalls zu konfigurieren.

14. Elektromechanischer Stellantrieb (ACT) für eine mobile Einrichtung (ME) aus dem Bauwesen, eine Kommunikationsvorrichtung (DC) nach einem der Ansprüche 11 bis 13 umfassend, und einen Motor (M), wobei eine Steuerungseinheit von der Verarbeitungseinheit (PRS) getrennt sein kann oder damit zusammenfallen kann, und ausgeführt ist, um den Motor (M) in Abhängigkeit von den durch den Empfänger (RCP) empfangenen Signalen (RS2) gemäß dem betrieblichen Kommunikationsmodus (MUO) zu steuern.

15. Bidirektionale Fernsteuerung (R2W) zur Fernsteuerung eines Stellantriebs (ACT) für eine mobile Einrichtung (ME) aus dem Bauwesen, eine Kommunikationsvorrichtung (DC) nach Anspruch 13 umfassend.

## Claims

1. A method for operating a communication device (DC) for remotely controlling an actuator (ACT) for a movable equipment (ME) of the building, comprising the steps consisting in:
a) analyzing a first received signal (RS) to determine whether at least one sequence of the first received signal (RS) can be interpreted as being in accordance with a configuration communication mode (MCi) usable by the communication device (DC);
b) receiving at least one sequence of the first received signal (RS) in accordance with a configuration communication mode, defining said configuration communication mode (MCi) as identified configuration communication mode;
c) defining an operational communication mode (MUO) depending on the identified configuration communication mode (MCi);
d) receiving a second signal (RS2) according to the operational communication mode (MOU); and
e) interpreting the second received signal (RS2) in accordance with the operational communication mode (MUO), so as to identify control data in the second received signal (RS2).

2. The method according to claim 1, wherein the definition of the operational communication mode (MUO) is carried out depending on the identified configuration communication mode (MCi), on the one hand, and, data relative to predetermined relations between configuration communication modes (MCj) and operational communication modes (MUk), on the other hand.

3. The method according to claim 1, wherein the definition of the operational communication mode (MUO) is carried out by defining the operational communication mode (MUO) as being the identified configuration communication mode (MCi).

4. The method according to any of the preceding claims, wherein the analysis of the first received signal (RS) to determine whether at least one sequence of the first received signal (RS) can be interpreted as being in accordance with said configuration communication mode (MCi) comprises the checking of the compliance of a sequence of the first received signal (RS) with a frame format of a protocol type (Pj) corresponding to said configuration communication mode (MCi).

5. The method according to any of the preceding claims, wherein the analysis of the first received signal (RS) to determine whether at least one sequence of the first received signal (RS) can be interpreted as being in accordance with said configuration communication mode (MCi) comprises the checking of the compliance of a sequence of the first received signal (RS) with the preamble (SYNC) of a frame belonging to the protocol type (Pj) corresponding to said configuration communication mode (MCi).

6. The method according to any of the preceding claims, wherein the analysis of the first received signal (RS) to determine whether at least one sequence of the first received signal (RS) can be interpreted as being in accordance with said configuration communication mode (MCi) comprises the comparison between an error check code calculated from data of the received signal (RS), on the one hand, and , the value of an error check code comprised in a received signal frame (RS) on the other hand.

7. The method according to any of the preceding claims, wherein the analysis of the first received signal (RS) as a sequence in accordance with said configuration communication mode (MCi) comprises the steps consisting in:
a') selecting (E2) a particular configuration communication mode (MCj) among a plurality of configuration communication modes (MC1 to MCp) usable by the communication device (DC);
b') waiting (E5) for the reception of a signal (RS) during a determined time interval (Tj);
c') if no signal is received within the determined time interval (Tj), returning to step a') of selecting a particular configuration communication mode by selecting another configuration communication mode among the plurality of configuration communication modes (MC1 to MCp) usable by the communication device (DC);
d') If a signal is received within the determined time interval (Tj), carrying out (E6) an attempt to interpret (Tst(MCj, RS)) of the received signal (RS) according to the selected configuration communication mode (MCj);
e') If at least one sequence of the received signal (RS) can be interpreted as being in accordance with the selected configuration communication mode (MCj), defining said selected communication mode (MCj) as the identified configuration communication mode (MCi);
f) If the received signal is not interpreted as being at least partly in accordance with the selected configuration communication mode (MCj), returning to step a') of selecting a particular configuration communication mode by selecting another configuration communication mode among the plurality of configuration communication modes (MC1 to MCp) usable by the communication device (DC).

8. The method according to claim 7, wherein a configuration (E4) of the communication device (DC) is carried out following the selection of a configuration communication mode (MCj).

9. The method according to any of the preceding claims, wherein distinct configuration communication modes (MC1 to MCp) usable by the communication device (DC) correspond to different types of communication protocols (Pj).

10. The method according to any of the preceding claims, wherein distinct configuration communication modes (MC1 to MCp) usable by the communication device (DC) correspond to communications over distinct frequency bands (BFk).

11. A communication device (DC) for the remote control of an actuator (ACT) for a movable equipment (ME) of the building comprising a receiver (RCP) and a data processing unit (PRS) intended to receive a signal (RS, RS2) coming from the receiver (RCP) and to interpret the received signal (RS, RS2) in accordance with a communication mode (MCi, MCj, MOU), the communication device being arranged to implement a method according to any of claims 1 to 10.

12. The device according to claim 11, wherein the processing unit (PRS) is arranged to configure the receiver (RCP) so as to allow a reception in a determined frequency band (BFk).

13. The device according to any of claims 11 to 12, comprising a transmitter (EMT), the processing unit (PRS) being arranged to configure the transmitter (EMT) if necessary.

14. An electromechanical actuator (ACT) for a movable equipment (ME) of the building comprising a communication device (DC) according to any of claims 11 to 13, and a motor (M), a control unit which can be distinct or combined with the processing unit (PRS) and being arranged to control the motor (M) depending on signals (RS2) received by the receiver (RCP) according to the operational communication mode (MOU).

15. A bidirectional remote control (R2W) for remotely controlling an actuator (ACT) for a movable equipment (ME) of the building comprising a communication device (DC) according to claim 13.
